# EUROPÄISCHE PATENTSCHRIFT

(11) **EP 2 709 918 B1**
(45) Veröffentlichungstag und Bekanntmachung des Hinweises auf die Patenterteilung: **01.07.2015**
(21) Anmeldenummer: 12720429.5
(22) Anmeldetag: 10.05.2012
(51) Int. Cl.: B65D 1/02, B65D 1/16, B29C 49/06

(54) **IN EINEM STRECKBLASVERFAHREN HERGESTELLTER KUNSTSTOFFBEHÄLTER MIT EINEM GESCHNITTENEN HALS**
PLASTICS MATERIAL CONTAINER WHICH IS PRODUCED BY STRETCH BLOW MOULDING AND HAS A CUT NECK
RÉCIPIENT EN PLASTIQUE À COL COUPÉ FABRIQUÉ PAR UN PROCÉDÉ DE FORMAGE PAR SOUFFLAGE-ÉTIRAGE

(30) Priorität: 19.05.2011 CH 852112011
(43) Veröffentlichungstag der Anmeldung: 26.03.2014
(73) Patentinhaber: Alpla Werke Alwin Lehner GmbH & Co. KG, 6971 Hard (AT)
(72) Erfinder: SIEGL, Robert, A-6850 Dornbirn (AT)
(74) Vertreter: Bohest AG Branch Ostschweiz
(86) Internationale Anmeldenummer: PCT/EP2012/002008
(87) Internationale Veröffentlichungsnummer: WO 2012/156048

(56) Entgegenhaltungen:
- US-A1- 2004 121 097
- US-A1- 2005 048 235
- US-B1- 6 228 317
- US-B1- 6 237 791

## Beschreibung

Die Erfindung betrifft einen in einem Streckblasverfahren hergestellten Kunststoffbehälter mit einem geschnittenen Hals gemäss dem Oberbegriff des Patentanspruchs 1.

Ein grosse Zahl der heutzutage eingesetzten Kunststoffbehälter, insbesondere beispielsweise Kunststoffflaschen und dergleichen, wird in einem Streckblasverfahren hergestellt. Beim Streckblasverfahren wird ein sogenannter Preform, der üblicherweise eine röhrchenartige Gestalt besitzt, an seinem einen Längsende einen Boden und am anderen Längsende einen Halsbereich mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach diesem Blas- und Reckvorgang wird der fertige, streckverfestigte Kunststoffbehälter aus der Blasform entformt.

Der am häufigsten für die Herstellung von Kunststoffbehältern im Streckblasverfahren eingesetzte Rohstoff ist Polyethylenterephthalat (PET). PET weist infolge der im Streckblasverfahren durchgeführten hohe Verstreckung sehr gute mechanische Festigkeitswerte auf. Beispielsweise wird im Streckblasverfahren von PET ein Gesamtverstreckungsfaktor von bis zu 20 erreicht. Dem steht bei Polyolefinen, wie Polyethylen (PE) oder Polypropylen (PP), die üblicherweise in einem Extrusionsblasverfahren verarbeitet werden, ein Gesamtverstreckungsfaktor von meist weiniger als 5 gegenüber. Extrusionsgeblasene Kunststoffbehälter weisen daher gegenüber streckgeblasenen PET Behältern reduzierte mechanische Festigkeitswerte auf und sind insbesondere deswegen nicht innendruckfest. Mit Kohlendioxid angereicherte Flüssigkeiten können daher in extrusionsgeblasenen Kunststoffbehältern nicht aufbewahrt werden.

Für bestimmte Anwendungen von PET Behältern, beispielsweise im Waschmittelbereich, müssen die Behälter Hälse mit sehr grossen Innendurchmessern, beispielsweise 30 mm bis 150 mm, aufweisen. Der Einsatz von speziellen Preforms, die üblicherweise in einem Kunststoffspritzverfahren, insbesondere in einem Spritzgussverfahren, hergestellt werden, verursacht sehr hohe Kosten. Dies resultiert daraus, dass für die Herstellung von Preforms mit grossen Öffnungsdurchmessern bzw. Halsweiten sehr hohe Schliesskräfte benötigt werden, um das Spritzwerkzeug geschlossen zu halten. Dafür sind entweder sehr grosse und teure Spritzgussmaschinen erforderlich, oder es muss eine Vielzahl von kleineren Spritzgussmaschinen mit nur wenigen Spritzkavitäten eingesetzt werden. Die Herstellkosten für Preforms mit grossen Öffnungsdurchmessern sind auch deshalb hoch, weil die Öffnungsdurchmesser in der Regel nicht genormt sind. Das bedeutet, dass für jedes neue Projekt ein neuer Sonderpreform benötigt wird, für dessen Herstellung eine neue Spritzgussform gebaut werden muss.

Bei der Herstellung von Preforms im Spritzgussverfahren sollte die Wandstärke des Preforms 1 mm nicht unterschreiten; bei einigen Anlagen beträgt die Mindestwandstärke des Preforms sogar wenigstens 2mm. Dadurch wird insbesondere für den Halsbereich des Preforms sehr viel Material verwendet. Dies erhöht die Kosten und führt zu einem unnötig grossen Materialeinsatz, der auch aus ökologischen Gründen unerwünscht ist. Kunststoffbehälter mit grossen Öffnungsdurchmessern bzw. grossen Halsweiten verursachen aber auch bei den konventionellen Streckblasverfahren Probleme. Standard Streckblasvorrichtungen sind üblicherweise für Preforms mit Öffnungsweiten von 28 mm bis 48 mm ausgelegt. Für die Verarbeitung von Preforms mit Öffnungsweiten von mehr als 48 mm und grösser müssen daher spezielle Streckblasvorrichtungen eingesetzt werden. Um diesen Nachteilen abzuhelfen und eine kostengünstigere Herstellung von Kunststoffbehältern mit grossen Öffnungsdurchmessern zu ermöglichen, haben sich im Stand der Technik streckgeblasene Kunststoffbehälter etabliert, die einen geschnittenen Hals aufweisen. Derartige Kunststoffbehälter werden aus herkömmlichen Preforms mit standardisierten kleineren Öffnungsdurchmessern hergestellt, wie sie üblicherweise für die Herstellung von Softdrink- oder Wasserflaschen und dergleichen zum Einsatz kommen. Im Streckblasverfahren werden aus diesen herkömmlichen Preforms Behälter mit einem sogenannten Dom geblasen, der nach dem Streckblasprozess vom jeweiligen Kunststoffbehälter abgeschnitten wird. Ein derartiger Kunststoffbehälter ist beispielsweise aus der US-6,237,791 B1 bekannt, welche den nächstliegenden Stand der Technik bildet.

Der Dom befindet sich unterhalb des im Spritzgussverfahren für den Preform festgelegten Halses. Er weist einen deutlich grösseren Durchmesser auf als der Preformhals und schliesst an den Körper des Behälters an. Der weite Hals mit dem grösseren Innendurchmesser wird somit durch den Blasprozess festgelegt. Dabei werden auch die Aussenkonturen, beispielsweise Gewindeabschnitte oder dergleichen am später geschnittenen Hals des Kunststoffbehälters festgelegt. Dies erlaubt es auch, die Position der Ausengewindeabschnitte oder dergleichen Anschlusseinrichtungen für die Montage von komplexen Verschlusssystemen sehr genau festzulegen. Die Ausrichttoleranz für derartige spezielle Verschlusssystem beträgt oft nur ± 1° bis ± 3°. Die geforderte Präzision der Ausrichtung der Gewindeabschnitte bzw. dergleichen Anschlusseinrichtungen bedingte daher bei den Herstellverfahren im ein- oder zweistufigen Streckblasverfahren eine spezielle Aufheiztechnik des Preforms und eine exakte Ausrichtung des Preforms beim Einsetzen in das Blasformwerkzeug, was den Aufwand für die Herstellung der Kunststoffbehälter noch weiter vergrösserte.

Die Qualität des geschnittenen Halses, insbesondere der Schneidkante, ist in der Regel relativ schlecht. Dadurch muss bei den streckgeblasenen Kunststoffbehältern mit geschnittenem Hals des Stands der Technik ein erhöhter Aufwand für die Abdichtung der Halsöffnung betrieben werden. Eine Form der Abdichtung besteht darin, dass diese Behälter, die oft auch eine dosenartige Gestalt aufweisen, mit Deckeln versehen werden, die zur Abdichtung induktiv oder konduktiv versiegelt werden. Diese Methode ist aufwendig und bedingt relativ grosse apparative Investitionen. Alternative Abdichtungssysteme sehen vor, im Verschluss, der beispielsweise aufgeschraubt wird, eine weiche Verschlusseinlage aus einem Elastomer oder aus einem geschäumten Material oder ähnlichem anzuordnen. Die Abdichtung des Halses erfolgt dann durch die Anpressung der elastisch verformbaren Verschlusseinlage an die Kante des geschnittenen Halses. Diese zusätzlichen Verschlusseinlagen sind jedoch oft unvereinbar mit Recyclinganforderungen hinsichtlich des Einsatzes möglichst weniger und einheitlicher Rohstoffe, oder sie erfordern beim Recycling spezielle, aufwendige Trennschritte. Aus dem Stand der Technik sind auch Verschlusssysteme bekannt, bei denen der unregelmässig geschnittene Rand des Behälterhalses in einen Metalldeckel eingebördelt wird. Auch diese Verschlussvariante ist verhältnismässig aufwendig und wegen der unterschiedlichen Materialien aus der Sicht des Recycling wenig erstrebenswert.

Aufgabe der vorliegenden Erfindung ist es daher, einen streckgeblasenen Kunststoffbehälter mit einem geschnittenen Hals dahingehend zu modifizieren, dass er auch ohne aufwendige Versiegelungsschritte dicht verschliessbar ist. Auf verformbare Verschlusseinlagen aus anderen Rohstoffen als das für den Kunststoffbehälter eingesetzte Kunststoffmaterial soll verzichtet werden können. Der Kunststoffbehälter soll insbesondere für Verschlusssysteme mit Innenkonus geeignet sein. Dabei soll der streckgeblasene Kunststoffbehälter mit geschnittenem Hals einfach und kostengünstig in der Herstellung sein.

Die Lösung dieser und noch weiterer Aufgaben besteht in einem in einem Streckblasverfahren hergestellten Kunstoffbehälter mit einem geschnittenen Hals, welche die im Patentanspruch 1 aufgelisteten Merkmale aufweist. Weiterbildungen und/oder vorteilhafte und bevorzugte Ausführungsvarianten der Erfindung sind Gegenstand der abhängigen Patentansprüche.

Die Erfindung schlägt einen in einem Streckblasverfahren hergestellten Kunststoffbehälter mit einem geschnittenen Hals vor, der aus einem in einem Kunststoffspritzverfahren oder einem Fliesspressverfahren gefertigten Preform der unmittelbar nach seiner Herstellung oder räumlich und/oder zeitlich getrennt in eine Formkavität eines Blasformwerkzeugs einer Streckblasvorrichtung eingesetzt und mit Hilfe eines Blasmediums durch Überdruck gemäss der Formkavität aufgeblasen, mit einem Reckdorn gereckt und entformt worden ist, und danach durch Abschneiden eines überschüssigen Abschnitts, der ein gespritztes Halsteil des Preforms umfasst, zu dem gewünschten Kunststoffbehälter geformt worden ist. Ein nach dem Schneiden verbleibender Hals des streckgeblasenen Kunststoffbehälters weist unterhalb des geschnittenen Randes eine im wesentlichen radial an seiner Aussenwandung umlaufende Verjüngung auf, die an der gegenüberliegenden Innenwandung eine im wesentlichen radial umlaufende Stufe bildet. Die Stufe ist zum Zusammenwirken mit einem Dichtkonus ausgebildet, der von einem Verschlussteil abragt, welches auf den geschnittenen Hals des Kunststoffbehälters montierbar ist.

Der erfindungsgemässe Kunststoffbehälter wird nach dem aus dem Stand der Technik hinlänglich bekannten Streckblasverfahren hergestellt. Dabei kann es sich um ein einstufiges Streckblasverfahren handeln, bei dem ein im Kunststoffspritzverfahren oder in einem Fliesspressverfahren hergestellter Preform unmittelbar nach seiner Herstellung in das Blasformwerkzeug einer Streckblasvorrichtung eingesetzt wird und dort gemäss der Formkavität aufgeblasen, gereckt und entformt wird. Er kann aber auch in einem zweistufigen Streckblasverfahren hergestellt sein, bei dem der zuvor gefertigte Preform zeitlich und/oder räumlich getrennt in einer Streckblasvorrichtung aufgeblasen und gereckt wird. Der Kunststoffbehälter wird mit einem sogenannten Dom geblasen, an dem der Halsabschnitt des Behälters festgelegt ist. Ein überschüssiger Abschnitt des Kunststoffbehälters, der ein Halsteil des Preforms umfasst, wird nach dem Entformen abgeschnitten. Der verbleibende geschnittene Hals des Kunststoffbehälters weist am Rand einen deutlich grösseren Öffnungsdurchmesser auf als der ursprüngliche Preform.

Die unterhalb des Randes an der Innenwandung des Halsabschnittes vorspringende umlaufende Stufe dient zur Abdichtung mit einem Dichtkonus, der von einem Verschlussteil abragt, das auf den geschnittenen Hals montierbar ist. Da die Abdichtung nun innerhalb des geschnittenen Halses erfolgt, spielt die Qualität des Randes des geschnittenen Halses keine Rolle mehr. Auf spezielle Dichteinlagen am Verschlussteil, die bei der Montage auf den Halsrand elastisch verformt werden und Unregelmässigkeiten des Schnittrandes ausgleichen müssen, kann verzichtet werden. Die Ausbildung der umlaufenden Stufe an der Innenwandung des geschnittenen Halses erlaubt die Verwendung von standardmässig ausgebildeten Verschlussteilen mit abragendem Dichtkonus.

Die Herstellung des Kunststoffbehälters erfolgt aus einem sehr einfachen Preform, wie er hinlänglich aus der Fertigung von Wasserflaschen oder Softdrinkflaschen bekannt ist. Die an der Innenwandung des Halsabschnitts des Kunststoffbehälters umlaufende Stufe wird erst im Streckblasverfahren erzeugt. Dies erlaubt es, die Abmessungen der umlaufenden Stufe nach Wunsch auszubilden. Der erfindungsgemässe Behälter ist einfach und kostengünstig herstellbar.

Die an der Innenwandung umlaufende Stufe wird von einer entsprechend an der Aussenwandung des geschnittenen Halses umlaufenden Verjüngung gebildet. Diese weist vom Rand des geschnittenen Halses einen axialen Abstand auf, der etwa 1 mm bis etwa 10 mm beträgt. Durch diesen Abstand können Verschlusselemente eingesetzt werden, deren abragender Dichtkonus die aus dem Stand der Technik bekannte axiale Länge aufweist, und es sind keine kostspieligen Sonderanfertigungen erforderlich.

Die umlaufende Stufe weist gegenüber der Innenwandung des geschnittenen Halses einen radialen Überstand auf, der etwa 0,2 mm bis etwa 4 mm beträgt. Bei diesem radialen Überstand der umlaufenden Stufe ist eine ausreichend grosse Vorspannkraft gegenüber dem Dichtkonus gewährleistet, um die Abdichtung des Verschlusselements sicherzustellen.

In einer Ausführungsvariante der Erfindung erstreckt sich die umlaufende Verjüngung axial über die gesamte Länge des geschnittenen Halses. In einer alternativen Ausführungsvariante der Erfindung ist umlaufende Verjüngung als eine in der Aussenwandung umlaufende Nut ausgebildet, die an der Innenwandung einen Dichtwulst bildet.

Die umlaufende Nut an der Aussenwandung kann eine Einkerbung sein. Sie kann aber auch eine grössere axiale Ausdehnung besitzen. Als zweckmässig für das dichtende Zusammenwirken mit dem Dichtkonus eines Verschlusselements erweist sich eine an der Aussenwandung gemessene axiale Länge der Nut von etwa 0,2 mm bis 10 mm.

Der erfindungsgemässe Kunststoffbehälter mit einer an der Innenwandung des geschnittenen Halses umlaufenden Stufe bzw. mit einem umlaufenden Dichtwulst erweist sich bei Kunststoffbehältern als zweckmässig, die am geschnittenen Rand des Halsabschnitts einen Innendurchmesser aufweisen, der grösser ist als 48 mm aber 150 mm nicht überschreitet. Für Kunststoffbehälter mit kleineren Halsdurchmessern sind im Kunststoffspritzverfahren oder im Fliesspressverfahren hergestellte Preforms erhältlich, die sehr kostengünstig massentechnisch herstellbar sind. Die dafür erforderlichen Anlagen und Werkzeuge sind erprobt und gehören vielfach zur Serienausstattung von Herstellern von Kunststoffbehältern. Alternativ existieren auch genügend Anbieter von Preforms mit kleineren Halsdurchmessern, von denen diese Preforms kostengünstig bezogen werden können. Derartige Preforms sind oft auch bereits mit einem an der Innenwandung des Preformhalses vorspringenden umlaufenden Wulst versehen. Die Abmessungen dieses üblicherweise im Kunststoffspritzverfahren, insbesondere im Spritzgussverfahren hergestellten umlaufenden Dichtwulstes sind jedoch oft durch die Entformbarkeit des Preforms aus dem Spritzwerkzeug limitiert. Auch kann der im Spritzgiessverfahren hergestellte umlaufende Dichtwulst bei dem nachfolgenden Streckblasverfahren eine gewisse Verformung erleiden, wodurch das dichtende Zusammenwirken des umlaufenden Dichtwulstes mit dem Dichtkonus eines Verschlusselements beeinträchtigt werden kann.

Nachdem der erfindungsgemässe Kunststoffbehälter an der Innenwandung seines geschnittenen Halses eine umlaufende Stufe bzw. einen umlaufenden Wulst aufweist, der eine Abdichtung an der Innenwandung des Halses erlaubt, besteht die Möglichkeit, den Rand des geschnittenen Halses gemäss den Anforderungen des Konsumenten auszubilden. In einer Ausführungsvariante der Erfindung weist daher der Rand des geschnittenen Halses einen Krümmungsradius (r) auf, der kleiner ist als 0,2 mm. Diese schaftkantige Ausbildung des Halsrandes sorgt beim Ausgiessen des Inhalts für ein "Abschneiden" des letzten Tropfens und bildet somit eine sogenannte "Dropless lip". Der Rand des geschnittenen Halses kann dabei derart geschnitten sein, dass er eine vom Schneidrand nach innen verlaufende Abschrägung aufweist. Der Schnitt kann aber auch derart geführt sein, dass die Abschrägung vom Schneidrand nach aussen verläuft.

In einer alternativen Ausführungsvariante des erfindungsgemässen Kunststoffbehälters weist der Rand des geschnittenen Halses einen Krümmungsradius (r) auf, der grösser 0,2 mm aber kleiner als 1,5 mm ist. Schneidränder mit grösseren Krümmungsradien genügen höheren Sicherheitsanforderungen, beispielsweise wenn anzunehmen ist, dass der Inhalt des Behälter direkt aus diesem genossen wird. Der grössere Krümmungsradius sorgt dabei für ein besseres Mundgefühl, wenn der Flaschenrand mit diesem in Berührung kommt.

Der erfindungsgemäss ausgebildete Kunststoffbehälter ist durch seine Innenabdichtung insbesondere wieder verschliessbar. Dies erlaubt die Herstellung von Kunststoffbehältern für Zwecke, in denen derzeit nach wie vor Glas das bevorzugte Material ist. Beispiele für derartige Einsatzgebiete sind die Aufbewahrung von Instant Kaffee, Instant Kakao, Instant Tee, Essiggurken bzw. Cornichons, saurem Gemüse und dergleichen, Mayonaise, Ketchup, Frühstücks-Brotaufstrichen, Spaghetti Saucen, Saucen aller Art, Senf, Meerrettich, usw. Für den Einsatz als Glasersatz erweist es sich von Vorteil, wenn der geschnittene Halsabschnitt eine Wandstärke von etwa 0,6 mm bis 1,8 mm aufweist.

Für die Anbindung eines Verschlussteils oder für die Montage eines komplexen Verschlusssystems ist der erfindungsgemässe Kunststoffbehälter an der Aussenwandung seines geschnittenen Halses mit einem Gewinde, mit Gewindeabschnitten oder dergleichen formschlüssigen Vorsprünge oder Vertiefungen ausgestattet, die im Streckblasverfahren ausgebildet sind. Die Herstellung der Anbindeelemente im Streckblasverfahren erlaubt es, den Preform ohne Orientierung in das Blasformwerkzeug einzusetzen. Die exakte Ausrichtung der Anbindeelemente ist durch die Formkavität vorgegeben. Auf diese Weise ist die oftmals geforderte hohe Ausrichtgenauigkeit von beispielsweise ± 1 ° bis ± 3° ohne grösseren Aufwand erreichbar.

Je nach den Anforderungen an den Kunststoffbehälter ist dieser ein- oder mehrschichtig ausgebildet.

Dabei erweist es sich für die Festigkeitseigenschaften des Kunststoffbehälters von Vorteil, wenn wenigstens eine Schicht aus einem Kunststoff bzw. aus einem Kunststoffgemisch der Gruppe bestehend aus Polyestern, Polyolefinen, Polyamiden, Polystyrolen Polylactiden und Polyamiden, insbesondere PET, PE, PP, PEN, PVC, PVDC, PLA, besteht.

Für die Herstellung des Preforms in einem Kunststoffspritzverfahren oder in einem Fliesspressverfahren und für die nachfolgende Ausformung des Kunststoffbehälter aus dem Preform in einem nachfolgenden Streckblasverfahren besteht wenigstens eine Schicht aus mono-, bi- oder polymodalem HDPE oder Polypropylen.

Für viele Anwendungen des Kunstoffbehälter, insbesondere für den Einsatz im Lebensmittelbereich, erweist es sich von Vorteil, wenn er mehrschichtig ausgebildet ist und wenigstens eine Schicht mit Barriereadditiven, insbesondere Sauerstofffängern, Nanoclays oder UV-Blockern und/oder eine Gleitbeschichtung und/oder eine Restentleerungsbeschichtung aufweist.

Aus ökologischen Gründen besteht der erfindungsgemässe Kunststoffbehälter aus bis zu 100% rezykliertem Kunststoffmaterial.

Der erfindungsgemäss ausgebildete Kunststoffbehälter mit grossem Halsdurchmesser eignet sich insbesondere für die Aufbewahrung von zähflüssigen Inhalten, vorzugsweise von zähflüssigen Lebensmitteln. Die umlaufende Stufe bzw. der umlaufende Wulst an der Innenwandung des Halsabschnitts erlaubt eine zuverlässige Abdichtung, wodurch sich der Kunststoffbehälter beispielsweise auch für die Aufbewahrung von Joghurts, Konfitüren, etc. eignet, die löffelweise direkt aus dem Behälter entnommen werden.

Weitere Vorteile ergeben sich aus der nachfolgenden Beschreibung eines Ausführungsbeispiels der Erfindung unter Bezugnahme auf die schematischen Zeichnungen. Es zeigen in nicht massstabsgetreuer geschnittener Darstellung:
- Figs. 1a und 1b: zwei Prinzipdarstellungen zur Erläuterung der Herstellung eines streckgeblasenen Kunststoffbehälters mit geschnittenem Hals;
- Fig. 2: einen Halsabschnitt eines streckgeblasenen Kunststoffbehälters mit geschnittenem Hals;
- Fig. 3: eine teilweise geschnittene Darstellung des Halses des Kunststoffbehälters gemäss Fig. 2 mit einem montierten Verschlussteil; und
- Fig. 4: eine vergrösserte Schnittdarstellung des erfindungswesentlichen Bereichs des geschnittenen Halses.

In den schematischen Darstellungen tragen gleiche Elemente jeweils gleiche Bezugszeichen.

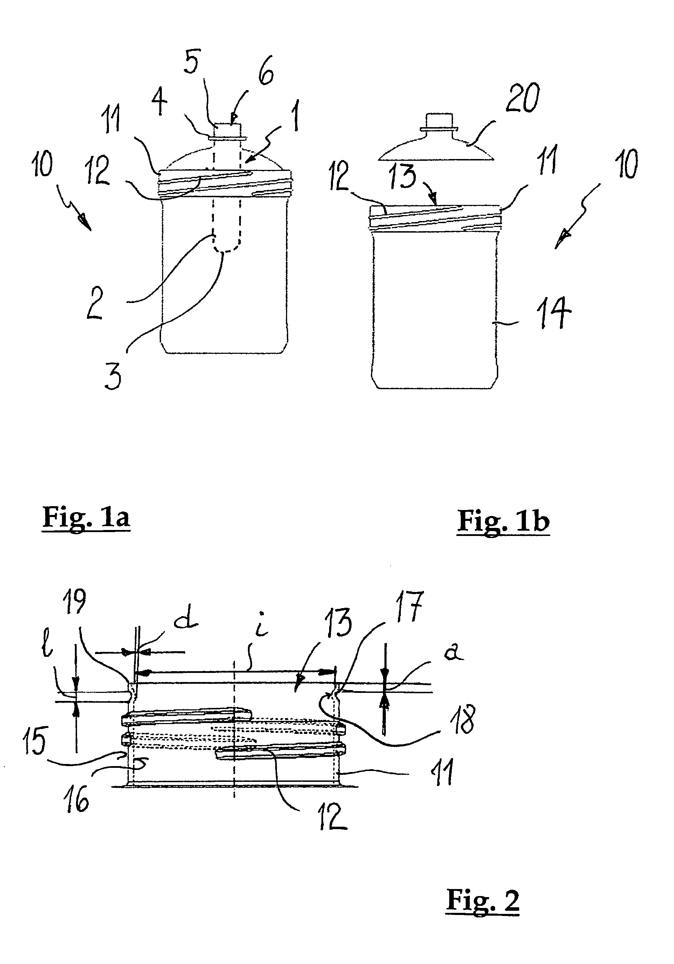

Die Prinzipdarstellung in Fig. 1a zeigt einen gesamthaft mit dem Bezugszeichen 10 bezeichneten Kunststoffbehälter, der in einem Streckblasverfahren aus einem standardmässig ausgebildeten, in einem Kunststoffspritzverfahren oder in einem Fliesspressverfahren hergestellten Preform geformt worden ist, der in der Darstellung strichliert angedeutet und gesamthaft mit dem Bezugszeichen 1 versehen ist.

Derartige Preforms 1 sind aus dem Stand der Technik hinlänglich bekannt. Sie weisen üblicherweise einen länglichen, im wesentlichen zylindrisch oder leicht konisch ausgebildeten Körper 2 auf. An einem Längsende ist der Körper 2 des Preforms 1 mit einem Boden 3 verschlossen. An das andere Längsende des Körpers 2 des Preforms 1 schliesst ein Halsteil 5 an, das mit einer Öffnung 6 versehen ist, deren Durchmesser beispielsweise etwa 28 mm bis 30 mm aufweist. Das Halsteil 5 ist durch einen Transferring 4 vom Körper 2 des Preforms 1 getrennt. Der Preform 1 wird in ein Blasformwerkzeug einer Streckblasvorrichtung eingesetzt und dort durch ein mit Überdruck eingeblasenen Blasmedium, üblicherweise Luft, gemäss einer vom Blasformwerkzeug umschlossenen Formkavität aufgeblasen und gleichzeitig mit einem Reckdorn gereckt bzw. verstreckt.

Für die Herstellung eines Kunststoffbehälters 10 mit einem Öffnungsdurchmesser, der grösser als 48 mm ist und beispielsweise bis zu 150 mm betragen kann, wird der Preform 1 unterhalb des Transferrings 4 domartig erweitert aufgeblasen. Dabei wird auch der Hals 11 des Kunststoffbehälters geformt, an dem Gewindegänge 12 bzw. Gewindeabschnitte eines Aussengewindes oder dergleichen formschlüssige Anbindeelemente ausgebildet sind. Die Gewindegänge 12 bzw. Gewindeabschnitte oder dergleichen sind durch die Formkavität festgelegt. Daher können sie mit sehr hoher Ausrichtegenauigkeit erstellt werden, ohne dass dazu der Preform 1 gerichtet in das Blasformwerkzeug der Streckblasvorrichtung eingesetzt werden müsste. Wie beim Streckblasverfahren üblich, behalten der Transferring 4 und das Halsteil 5 des Preforms 1 auch nach dem Aufblasen und Verstrecken des Preformkörpers 2 ihre im Kunststoffspritzverfahren ausgebildete Gestalt unverändert bei.

Fig. 1b zeigt den streckgeblasenen Kunststoffbehälter 10, nachdem der domartig aufgeblasene Abschnitt 20, an dem noch der unveränderte Transferring und das unveränderte Halsteil des Preforms ersichtlich sind, abgetrennt worden ist. Durch das Abtrennen des domartig aufgeblasenen Abschnitts 20 erhält der streckgeblasene Kunststoffbehälter eine Halsöffnung 13, deren Durchmesser deutlich grösser ist als derjenige der Öffnung des Preforms. Der Durchmesser der Öffnung 13 des geschnittenen Halses 11 ist grösser als 48 mm und kann bis zu 150 mm betragen. Die am geschnittenen Hals 11 im Streckblasverfahren ausgeformten Gewindeabschnitte sind wiederum mit dem Bezugszeichen 12 versehen. Der beispielsweise zylindrische Körper des streckgeblasenen Kunststoffbehälters trägt das Bezugszeichen 14.

In Fig. 2 ist der geschnittene Hals 11 eines erfindungsgemäss ausgebildeten streckgeblasenen Kunststoffbehälters dargestellt. Die im Streckblasverfahren ausgeformten Gewindeabschnitte tragen das Bezugszeichen 12. Die Halsöffnung ist mit dem Bezugszeichen 13 versehen. Die Halsöffnung 13 weist einen Innendurchmesser i auf, der grösser ist als 30 mm und bis zu 150 mm betragen kann. Unterhalb des Randes 19 des geschnittenen Halses 11 des Kunststoffbehälters ist in seiner Aussenwandung 15 eine umlaufende Verjüngung in Form einer Nut 17 ausgebildet. Die umlaufende Nut 17 weist vom Rand 19 des geschnittenen Halses 11 einen axialen Abstand a auf, der etwa 1 mm bis 10 mm beträgt. Eine an der Mündung der umlaufende Nut 17 zur Aussenwandung 15 gemessene axiale Länge l der Nut 17 beträgt etwa 0,2 mm bis 10 mm. Durch die in der Aussenwandung 15 des Halses 11 im Streckblasverfahren ausgeformte umlaufende Nut 17 ist an der Innenwandung 16 des Halses 11 ein radial umlaufender Dichtwulst 18 ausgebildet. Der radial umlaufende Dichtwulst 18 weist gegenüber der Innenwandung 16 des geschnittenen Halses 11 einen radialen Überstand d auf, der etwa 0,2 mm bis etwa 4 mm beträgt.

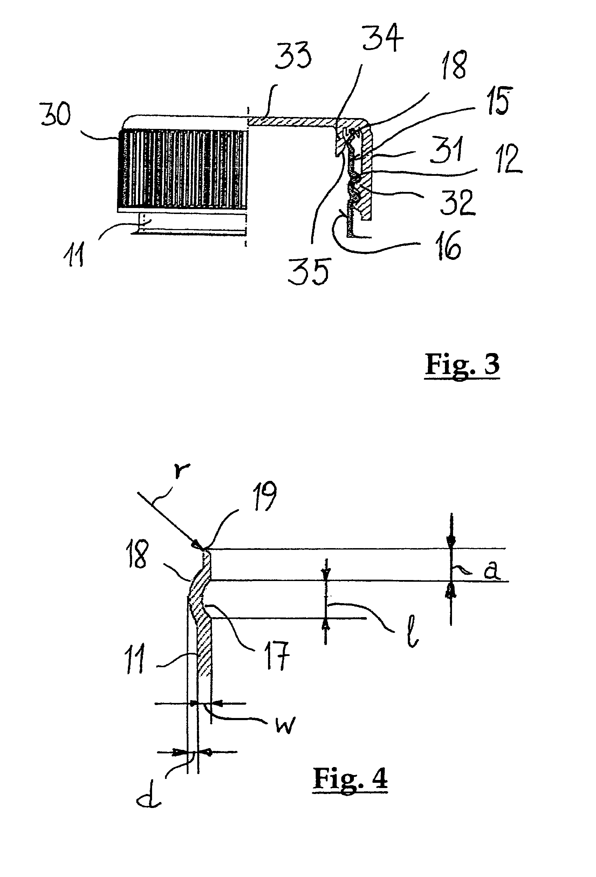

Fig. 3 zeigt eine teilweise geschnittene Darstellung des geschnittenen Halses 11 eines erfindungsgemäss ausgebildeten Kunststoffbehälters mit einem montierten Verschlussteil 30. Bei dem dargestellten Verschlussteil 30 handelt es sich beispielsweise um einen Schraubverschluss. Dieser weist eine topfförmige Verschlusskappe 31 auf, an deren Innenwandung ein Innengewinde 32 ausgebildet ist. Dieses greift in die an der Aussenwandung 15 des geschnittenen Halses 11 ausgebildeten Gewindegänge 12 ein. Von der Deckfläche 33 der Verschlusskappe 31 ragt ein Dichtkonus 34 ab, der bei aufgeschraubter Verschlusskappe 31 mit dem gegenüber der Innenwandung 16 des geschnittenen Halses 11 vorspringenden radial umlaufenden Dichtwulst 18 zusammenwirkt und so eine Innenabdichtung bewirkt. Die Aussenwandung 35 des Dichtkonus 34 ist dabei mit eine Anlaufschräge versehen, dass der Dichtkonus 34 beim Aufschrauben der Verschlusskappe 31 am radial umlaufenden Dichtwulst 18 entlang gleitet und mit zunehmendem Aufschrauben der Verschlusskappe 31 der Druck des Dichtwulstes 18 auf den Dichtkonus 34 erhöht wird. Dadurch ist eine zuverlässige Abdichtung gewährleistet.

Fig. 4 zeigt eine geschnittene Darstellung eines Endabschnitts des geschnittenen Halses 11 des streckgeblasenen Kunststoffbehälters. Die im Streckblasverfahren hergestellte, als umlaufende Nut ausgebildete Verjüngung trägt wiederum das Bezugszeichen 17; der dadurch an der gegenüberliegenden Wandung erzeugte radial umlaufende Dichtwulst ist mit dem Bezugszeichen 18 versehen. Der axiale Abstand der umlaufenden Nut 17 von dem mit dem Bezugszeichen 19 versehenen Rand des geschnittenen Halses 11 ist mit a gekennzeichnet. Die axiale Länge der Nut 17 ist mit I bezeichnet. Der radiale Überstand des Dichtwulstes 18 gegenüber der Innenwandung des geschnittenen Halses 11 trägt das Bezugszeichen d. Der radial umlaufende Dichtwulst 18 erlaubt eine Innenabdichtung gegenüber einem montierten Verschlussteil (Fig. 3). Der Rand 19 selbst ist an der Abdichtung nicht beteiligt und kann daher hinsichtlich anderer Anforderungen optimiert werden.

In einer Ausführungsvariante der Erfindung weist daher der Rand 19 des geschnittenen Halses 11 einen Krümmungsradius (r) auf, der kleiner ist als 0,2 mm. Diese schaftkantige Ausbildung des Halsrandes 19 sorgt beim Ausgiessen des Inhalts für ein "Abschneiden" des letzten Tropfens und bildet somit eine sogenannte "Dropless lip". Der Rand 19 des geschnittenen Halses 11 kann dabei derart geschnitten sein, dass er eine vom Schneidrand nach innen verlaufende Abschrägung aufweist. Der Schnitt kann aber auch - wie in Fig. 4 dargestellt - derart geführt sein, dass die Abschrägung vom Schneidrand nach aussen verläuft.

In einer alternativen Ausführungsvariante des erfindungsgemässen Kunststoffbehälters weist der Rand 19 des geschnittenen Halses 11 einen Krümmungsradius (r) auf, der grösser 0,2 mm aber kleiner als 1,5 mm ist. Schneidränder mit grösseren Krümmungsradien r genügen höheren Sicherheitsanforderungen, beispielsweise wenn anzunehmen ist, dass der Inhalt des Kunststoffbehälters direkt aus diesem genossen wird. Der grössere Krümmungsradius r sorgt dabei für ein besseres Mundgefühl, wenn der Flaschenrand mit diesem in Berührung kommt.

Die Wandstärke des geschnittenen Halses 11 trägt das Bezugszeichen w und beträgt bei Kunststoffbehältern, die an die Stelle von Glasbehältern treten, die beispielsweise für die Aufbewahrung von Instant Kaffee, Instant Kakao, Instant Tee, Essiggurken bzw. Cornichons, saurem Gemüse und dergleichen, Mayonaise, Ketchup, Frühstücks-Brotaufstrichen, Spaghetti Saucen, Saucen aller Art, Senf, Meerrettich, usw. eingesetzt werden, etwa 0,6 mm bis etwa 1,8 mm. Sollen besonders leichte Kunststoffbehälter (Flaschen, Dosen) hergestellt werden, beträgt die Wandstärke w des geschnittenen Halses 11 etwa 0,2 mm bis 0,6 mm.

Je nach den Anforderungen an den Kunststoffbehälter kann dieser ein- oder mehrschichtig ausgebildet sein. Dabei erweist es sich für die Festigkeitseigenschaften des Kunststoffbehälters von Vorteil, wenn wenigstens eine Schicht aus einem Kunststoff bzw. aus einem Kunststoffgemisch der Gruppe bestehend aus Polyestern Polyolefinen, Polyamiden, Polystyrolen Polylactiden und Polyamiden, insbesondere PET, PE, PP, PEN, PVC, PVDC, PLA, besteht. Für die Herstellung des Preforms in einem Kunststoffspritzverfahren oder in einem Fliesspressverfahren und für die nachfolgende Ausformung des Kunststoffbehälter aus dem Preform in einem nachfolgenden Streckblasverfahren kann es von Vorteil sein, wenn wenigstens eine Schicht aus mono-, bi- oder polymodalem HDPE oder Polypropylen besteht. Für viele Anwendungen des Kunstoffbehälter, insbesondere für den Einsatz im Lebensmittelbereich, erweist es sich von Vorteil, wenn er mehrschichtig ausgebildet ist und wenigstens eine Schicht mit Barriereadditiven, insbesondere Sauerstofffängern, Nanoclays oder UV-Blockern und/oder eine Gleitbeschichtung und/oder eine Restentleerungsbeschichtung aufweist. Aus ökologischen Gründen kann der erfindungsgemässe Kunststoffbehälter aus bis zu 100% rezykliertem Kunststoffmaterial (PCR Kunststoffen = Post Consumer Regrind Kunststoffen) bestehen.

Der erfindungsgemäss ausgebildete Kunststoffbehälter mit grossem Halsdurchmesser eignet sich insbesondere auch als Ersatz für bestehende Kunststoffflaschen, deren Hals bedingt durch die Herstellung des zugrunde liegenden Preforms im Spritzgussverfahren unnötig schwer ist bzw. eine zu geringe thermische oder durch Streckung bedingte Kristallisation erfahren hat, und deswegen für den vorgesehenen Anwendungszweck zu weich oder zu hitzeempfindlich ist. (Beispielsweise wird nicht kristallisiertes PET bereits unterhalb des Glasüberganspunktes von üblicherweise 70°C weich, während kristallisiertes PET teilweise erst bei Temperaturen um den Schmelzpunkt von 250°C erweicht.)

## Patentansprüche

1. Kunststoffbehälter mit einem geschnittenen Hals, der in einem Streckblasverfahren aus einem in einem Kunststoffspritzverfahren oder einem Fliesspressverfahren gefertigten Preform (1), der unmittelbar nach seiner Herstellung oder räumlich und/oder zeitlich getrennt in eine Formkavität eines Blasformwerkzeugs einer Streckblasvorrichtung eingesetzt und mit Hilfe eines Blasmediums durch Überdruck gemäss der Formkavität aufgeblasen, mit einem Reckdorn gereckt und entformt worden ist, und danach durch Abschneiden eines überschüssigen Abschnitts (20), der ein gespritztes Halsteil (5) des Preforms (1) umfasst, zu dem gewünschten Kunststoffbehälter (10) geformt worden ist, **dadurch gekennzeichnet, dass** ein nach dem Abschneiden verbleibender Hals (11) des streckgeblasenen Kunststoffbehälters (10) unterhalb des geschnittenen Randes (19) des Halses (11) eine im wesentlichen radial an seiner Aussenwandung (15) umlaufende Verjüngung aufweist, die an der gegenüberliegenden Innenwandung (16) eine im wesentlichen radial umlaufende Stufe bildet, die zum Zusammenwirken mit einem Dichtkonus (34) ausgebildet ist, der von einem Verschlussteil (30, 31, 33) abragt, welches auf den geschnittenen Hals (11) des Kunststoffbehälters (10) montierbar ist.

2. Kunststoffbehälter nach Anspruch 1, **dadurch gekennzeichnet, dass** die umlaufende Verjüngung vom Rand (19) des geschnittenen Halses (11) einen axialen Abstand (a) aufweist, der etwa 1 mm bis etwa 10 mm beträgt.

3. Kunststoffbehälter nach Anspruch 1 oder 2, **dadurch gekennzeichnet, dass** die umlaufende Stufe gegenüber der Innenwandung (16) des geschnittenen Halses (11) einen radialen Überstand (d) aufweist, der etwa 0,2 mm bis etwa 4 mm beträgt.

4. Kunststoffbehälter nach einem der vorangehenden Ansprüche, **dadurch gekennzeichnet, dass** sich die umlaufende Verjüngung über die gesamte Länge des geschnittenen Halses erstreckt.

5. Kunststoffbehälter nach einem der Ansprüche 1 bis 3, **dadurch gekennzeichnet, dass** die umlaufende Verjüngung als eine radial in der Aussenwandung (15) umlaufende Nut (17) ausgebildet ist, die an der gegenüberliegenden Innenwandung (16) einen Dichtwulst (18) bildet.

6. Kunststoffbehälter nach Anspruch 5, **dadurch gekennzeichnet, dass** die umlaufende Nut (17) eine an der Aussenwandung (15) des Halses (11) gemessene axiale Länge (I) aufweist, die etwa 0,2 mm bis 10 mm beträgt.

7. Kunststoffbehälter nach einem der vorangehenden Ansprüche, **dadurch gekennzeichnet, dass** der Hals (11) am geschnittenen Rand (19) einen Innendurchmesser (i) aufweist, der grösser ist als 48 mm aber 150 mm nicht überschreitet.

8. Kunststoffbehälter nach einem der vorangehenden Ansprüche, **dadurch gekennzeichnet, dass** der Rand (19) des geschnittenen Halses (11) einen Krümmungsradius (r) aufweist, der kleiner ist als 0,2 mm.

9. Kunststoffbehälter nach einem der Ansprüche 1 bis 7, **dadurch gekennzeichnet, dass** der Rand (19) des geschnittenen Halses (11) einen Krümmungsradius (r) aufweist, der grösser ist als 0,2 mm aber kleiner als 1,5 mm.

10. Kunststoffbehälter nach einem der vorangehenden Ansprüche, **dadurch gekennzeichnet, dass** der geschnittene Hals (11) eine Wandstärke (w) von etwa 0,6 mm bis 1,8 mm aufweist.

11. Kunststoffbehälter nach einem der vorangehenden Ansprüche, **dadurch gekennzeichnet, dass** der geschnittene Hals (11) an seine Aussenwandung Gewindegänge (12), Gewindeabschnitte oder dergleichen formschlüssige Vorsprünge oder Vertiefungen aufweist, die im Streckblasverfahren ausgeformt sind.

12. Kunststoffbehälter nach einem der vorangehenden Ansprüche, **dadurch gekennzeichnet, dass** er ein oder mehrschichtig ausgebildet ist und wenigstens eine Schicht aus einem Kunststoff bzw. aus einem Kunststoffgemisch der Gruppe bestehend aus Polyestern, Polyolefinen, Polyamiden, Polystyrolen, Polylactiden und Polyamiden, insbesondere PET, PE, PP, PEN, PVC, PVDC, PLA, aufweist.

13. Kunststoffbehälter nach Anspruch 11, **dadurch gekennzeichnet, dass** er wenigstens eine Schicht aus mono-, bi- oder polymodalem HDPE oder Polypropylen aufweist.

14. Kunststoffbehälter nach Anspruche 12 oder 13, **dadurch gekennzeichnet, dass** er mehrschichtig ausgebildet ist und wenigstens eine Schicht mit Barriereadditiven, insbesondere Sauerstofffängern, Nanoclays, UV-Blockern und/oder eine Gleitbeschichtung und/oder eine Restentleerungsbeschichtung aufweist.

15. Kunststoffbehälter nach einem der vorangehenden Ansprüche, **dadurch gekennzeichnet, dass** bis zu 100% aus rezykliertem Kunststoffmaterial besteht.

16. Kunststoffbehälter nach einem der vorangehenden Ansprüche und gefüllt mit einem zähflüssigen Inhalt, vorzugsweise mit einem zähflüssigen Lebensmittel.

## Claims

1. Plastic container with a cut neck, which container has been shaped to form the desired plastic container (10), in a stretch blow-moulding process, from a preform (1) which has been produced in a plastic injection-moulding process or an impact extrusion process and which, immediately after its manufacture or in a chronologically or spatially separated manner, has been inserted in a mould cavity of a blow-moulding tool of a stretch blow-moulding device and inflated in accordance with said mould cavity with the aid of a blowing medium by excess pressure, stretched with a stretching mandrel and removed from the mould; and which container has been shaped, after that, by the cutting-off of a superfluous section (20) which comprises an injection-moulded neck part (5) of the preform (1),
**characterised in that**
a neck (11) of the stretch blow-moulded plastic container (10), which neck is left after the cutting-off operation, has, underneath the cut edge (19) of said neck, a taper which runs round substantially radially at its outer wall (15) and which forms, on the opposed inner wall (16), a step which runs round substantially radially and which is designed to interact with a sealing cone (34) which protrudes downwards from an occluding part (30, 31, 33) which can be mounted on the cut neck (11) of the plastic container (10).

2. Plastic container according to Claim 1, **characterised in that** the circumferential taper of the edge (19) of the cut neck (11) has an axial interval (a) which amounts to about 1 mm to about 10 mm.

3. Plastic container according to Claim 1 or 2, **characterised in that** the circumferential step has a radial projecting height (d), in relation to the inner wall (16) of the cut neck (11), which amounts to about 0.2 mm to about 4 mm.

4. Plastic container according to one of the preceding claims, **characterised in that** the circumferential taper extends over the entire length of the cut neck.

5. Plastic container according to one of Claims 1 to 3, **characterised in that** the circumferential taper is constructed as a groove (17) which runs round radially within the outer wall (15) and forms a sealing bead (18) on the opposed inner wall (16).

6. Plastic container according to Claim 5, **characterised in that** the circumferential groove (17) has an axial length (1), measured at the outer wall (15) of the neck (11), which amounts to about 0.2 mm to 10 mm.

7. Plastic container according to one of the preceding claims, **characterised in that** the neck (11) has, at the cut edge (19), an internal diameter (i) which is greater than 48 mm but does not exceed 150 mm.

8. Plastic container according to one of the preceding claims, **characterised in that** the edge (19) of the cut neck (11) has a radius of curvature (r) which is smaller than 0.2 mm.

9. Plastic container according to one of Claims 1 to 7, **characterised in that** the edge (19) of the cut neck (11) has a radius of curvature (r) which is greater than 0.2 mm but smaller than 1.5 mm.

10. Plastic container according to one of the preceding claims, **characterised in that** the cut neck (11) has a wall thickness (w) of about 0.6 mm to 1.8 mm.

11. Plastic container according to one of the preceding claims, **characterised in that** the cut neck (11) has, on its outer wall, thread courses (12), thread sections or like form-locking projections or depressions, which are formed in the stretch blow-moulding process.

12. Plastic container according to one of the preceding claims, **characterised in that** it is of single-layer or multilayer construction and has at least one layer made of a plastic or of a plastic mixture belonging to the group consisting of polyesters, polyolefins, polyamides, polystyrenes, polyactides and polyamides, in particular PET, PE, PP, PEN, PVC, PVDC, PLA.

13. Plastic container according to Claim 11, **characterised in that** it has at least one layer made of monomodal, bimodal or polymodal HDPE or polypropylene.

14. Plastic container according to Claim 12 or 13, **characterised in that** it is of multilayer construction and has at least one layer made of barrier additives, in particular oxygen traps, nanoclays, UV-blockers and/or a slip coating and/or a residue-emptying coating.

15. Plastic container according to one of the preceding claims, **characterised in that** up to 100% consists of recycled plastic material.

16. Plastic container according to one of the preceding claims and filled with viscous contents, preferably with a viscous foodstuff.

## Revendications

1. Récipient en matière plastique avec un col coupé fabriqué par un procédé de formage par soufflage-étirage à partir d'une préforme (1) qui a été produite par un procédé de moulage par injection de matière plastique ou par un procédé d'extrusion, qui a été introduite dans une cavité de moule d'un moule de soufflage d'un dispositif de soufflage-étirage juste après sa fabrication ou séparément dans l'espace et/ou dans le temps et a été soufflée conformément à la cavité de moule à l'aide d'un agent de soufflage par surpression, étirée avec un mandrin d'étirage et démoulée, puis qui, par découpage d'une section excédentaire (20) comprenant une partie col (5) injectée de la préforme (1), a été façonnée pour donner le récipient en matière plastique (10) souhaité, **caractérisé en ce qu'**un col (11) du récipient en matière plastique soufflé-étiré (10) restant après la découpe présente, sous le bord coupé (19) du col (11), un rétrécissement périphérique sensiblement radial sur sa paroi extérieure (15), lequel rétrécissement forme un gradin périphérique sensiblement radial sur la paroi intérieure (16) opposée, lequel gradin est conçu pour coopérer avec un cône d'étanchéité (34) qui fait saillie d'une pièce de fermeture (30, 31, 33) pouvant être montée sur le col coupé (11) du récipient en matière plastique (10).

2. Récipient en matière plastique selon la revendication 1, **caractérisé en ce que** le rétrécissement périphérique se trouve à une distance axiale (a) du bord (19) du col coupé (11) qui est comprise entre environ 1 mm et environ 10 mm.

3. Récipient en matière plastique selon la revendication 1 ou 2, **caractérisé en ce que** le gradin périphérique présente, par rapport à la paroi intérieure (16) du col coupé (11), une saillie radiale (d) qui est comprise entre environ 0,2 mm et environ 4 mm.

4. Récipient en matière plastique selon l'une des revendications précédentes, **caractérisé en ce que** le rétrécissement périphérique s'étend sur toute la longueur du col coupé.

5. Récipient en matière plastique selon l'une des revendications 1 à 3, **caractérisé en ce que** le rétrécissement périphérique est réalisé sous la forme d'une rainure périphérique (17) qui s'étend radialement dans la paroi extérieure (15) et qui forme un bourrelet d'étanchéité (18) sur la paroi intérieure (16) opposée.

6. Récipient en matière plastique selon la revendication 5, **caractérisé en ce que** la rainure périphérique (17) présente une longueur axiale (I) mesurée sur la paroi extérieure (15) du col (11) qui est environ comprise entre 0,2 mm et 10 mm.

7. Récipient en matière plastique selon l'une des revendications précédentes, **caractérisé en ce que** le col (11) présente au niveau du bord coupé (19) un diamètre intérieur (i) qui est supérieur à 48 mm, mais qui ne dépasse pas 150 mm.

8. Récipient en matière plastique selon l'une des revendications précédentes, **caractérisé en ce que** le bord (19) du col coupé (11) présente un rayon de courbure (r) qui est inférieur à 0,2 mm.

9. Récipient en matière plastique selon l'une des revendications 1 à 7, **caractérisé en ce que** le bord (19) du col coupé (11) présente un rayon de courbure (r) qui est supérieur à 0,2 mm, mais inférieur à 1,5 mm.

10. Récipient en matière plastique selon l'une des revendications précédentes, **caractérisé en ce que** le col coupé (11) présente une épaisseur de paroi (w) d'environ 0,6 mm à 1,8 mm.

11. Récipient en matière plastique selon l'une des revendications précédentes, **caractérisé en ce que** le col coupé (11) présente, sur sa paroi extérieure des filets (12), des parties de filetage ou des saillies ou creux à complémentarité de formes analogues qui sont formées par soufflage-étirage.

12. Récipient en matière plastique selon l'une des revendications précédentes, **caractérisé en ce qu'**il est réalisé en une ou plusieurs couches et présente au moins une couche dans une matière plastique ou dans un mélange de matières plastiques appartenant au groupe composé des polyesters, polyoléfines, polyamides, polystyrènes, polylactides et polyamides, en particulier PET, PE, PP, PEN, PVC, PVDC, PLA.

13. Récipient en matière plastique selon la revendication 11, **caractérisé en ce qu'**il présente au moins une couche en HDPE ou polypropylène mono-, bi- ou polymodal.

14. Récipient en matière plastique selon la revendication 12 ou 13, **caractérisé en ce qu'**il est réalisé en plusieurs couches et présente au moins une couche comprenant des additifs barrières, en particulier des absorbeurs d'oxygène, des nano-argiles, des bloqueurs d'UV et/ou un revêtement glissant et/ou un revêtement de vidage total.

15. Récipient en matière plastique selon l'une des revendications précédentes, **caractérisé en ce qu'**il est composé à jusqu'à 100 % de matière plastique recyclable.

16. Récipient en matière plastique selon l'une des revendications précédentes et rempli d'un contenu visqueux, de préférence d'un produit alimentaire visqueux.
